# EUROPÄISCHE PATENTSCHRIFT

(11) **EP 0 352 541 B1**
(45) Veröffentlichungstag und Bekanntmachung des Hinweises auf die Patenterteilung: **10.03.1993**
(21) Anmeldenummer: 89112650.0
(22) Anmeldetag: 11.07.1989
(51) Int. Cl.: B60G 11/46, B60G 9/00

(54) **Federnde Achsaufhängung für Kraftfahrzeuge, insbesondere Nutzfahrzeuge**
Resilient axle suspension for motor vehicles, in particular for utility vehicles
Suspension élastique d'essieu pour véhicules automobiles, notamment pour véhicules utilitaires

(30) Priorität: 23.07.1988 DE 3825105
(43) Veröffentlichungstag der Anmeldung: 31.01.1990
(73) Patentinhaber: Iveco Magirus Aktiengesellschaft, D-89017 Ulm (DE)
(72) Erfinder: Werner, Joachim, Dipl.-Ing., D-7913 Senden/Iller (DE)
(74) Vertreter: Hanke, Hilmar

(56) Entgegenhaltungen:
- EP-A- 0 025 299
- DE-A- 1 755 017
- DE-A- 2 100 048
- DE-A- 2 349 381
- DE-U- 8 716 234
- FR-A- 2 529 838
- US-A- 3 841 655
- US-A- 3 850 445
- E.R. STERNBERG: "Heavy-duty truck suspensions", Februar 1976, Seiten 1-52, The Society of Automotive Engineers Inc., Warrendale, PA, US
- PATENT ABSTRACTS OF JAPAN, Band 2, Nr. 119, 4. Oktober 1978, Seite 3757 M 78; & JP-A-53 87 424 (TOYOTA JIDOSHA KOGYO K.K.) 01-08-1978

## Beschreibung

Die Erfindung betrifft eine federnde Achsaufhängung für Kraftfahrzeuge, insbesondere Nutzfahrzeuge, mit einer Führungsfeder und einem Federlenker, die beide am gemeinsamen vorderen Federlager des Fahrzeugrahmens angelenkt sind, wobei im Bereich des hinteren Endes des Federlenkers eine Luftfeder abgestützt ist, die oberseitig am Fahrzeugrahmen befestigt ist.

Eine federnde Achsaufhängung der vorgenannten Art ist aus DE-PS 2100048 und zum Teil aus US-PS 3841655 bekannt, wobei die Führungsfeder in einem hinteren Federlager verschieblich bezüglich des Fahrzeugrahmens angelenkt ist und der Federlenker sich unter der Führungsfeder befindet und im Bereich hinter der gefederten Achse nach unten gekröpft ist, um eine in der Regel groß dimensionierte Luftfeder unterseitig abzustützen, die oberseitig am Fahrzeugrahmen abgestützt ist. Da der Luftfederbalg unter einem durchgehenden Lenkerblatt angeordnet ist, muß er seitlich vom Lenkerblatt bzw. seitlich von der Führungsfeder plaziert werden, was aus Platzgründen bei einer gelenkten Vorderachse nicht geht. (Bei einer gelenkten Achse (Vorlaufachse) kann der Balg zur Rahmenmitte hin verschoben werden). Wird der Balg unter dem Rahmen angeordnet, müssen der Parabellenker und die Führungsfeder neben dem Fahrzeugrahmen liegen. Bei einer gelenkten Achse ist das zumeist aus Platzgründen nicht möglich (genügender Radeinschlagswinkel). Aus diesem Grunde eignet sich die bekannte Achsaufhängung nicht für eine gelenkte gefederte Achse. Ist der Luftfederbalg hinter der Spurstange angeordnet, wird der Radeinschlag beim Lenken weiter eingeschränkt. Von Nachteil ist ferner, daß durch die Abkröpfung des Federlenkers nach unten nur eine geringe Bodenfreiheit gegeben ist. Bei einer Achsquerführung nur über die Federlenker und die Achseinspannung ist die Seitenführung bei großen Federlängen nicht ausreichend. Kurze Führungslenker kommen aus kinematischen Gründen bei Achsschenkel- bzw. Lenkachsen nicht in Frage. Außerdem können Aufhängungsteile der Stahlfederung nicht übernommen werden.

Aufgabe der Erfindung ist die Schaffung einer federnden Achsaufhängung der eingangs genannten Art, die einfach aufgebaut ist und mit geringem Änderungsaufwand insbesondere für eine gelenkte Achse geeignet ist, bei der es auf einen möglichst großen Radeinschlag ankommt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 13.

Wesen der Erfindung ist insbesondere die Parabelausbildung der durchgehenden Führungsfeder, deren hinter der Achse angeordneter Abschnitt länger ist als der vordere. Die Parabelfeder befindet sich unter dem ungekröpften bzw. nur geringfügig abgekröpften, d.h. im wesentlichen in Längsrichtung geradlinigen Federlenker. Die Parabelfeder ist vorgesprengt, d.h. bei Nichtbelastung stark gebogen. Sie übernimmt einen statischen Traganteil der Achsaufhängung von beispielsweise 20 bis 30%, wodurch die hintere Luftfeder des Federlenkers vergleichsweise klein dimensioniert werden kann. Dadurch kann die Luftfeder unter dem Längsrahmen positioniert werden (und nicht seitlich von diesem, wie dies beispielsweise bei einer federnden Achsaufhängung gemäß DE-A-2 100 048 der Fall ist). Die Gesamtkonzeption ist so getroffen, daß mit verblüffend einfachen Mitteln eine sehr gute Achsaufhängung geschaffen wird, welche sich insbesondere für gelenkte Achsen eignet. Durch das lange hintere Ende der Führungsfeder hinter der gefederten Achse kann insgesamt das Spannungsniveau reduziert werden.

Im Sinne der vorliegenden Erfindung wird unter "durchgehender Führungsfeder" verstanden, daß die Führungsfeder vom vorderen Federlager bis zum hinteren Federlager verläuft und somit auf einfache Weise die Längs- und Querführung der Achse übernimmt, so daß der Federlenker lediglich die auftretenden Lastmomente zu übernehmen braucht. Im Bereich des hinteren Endes des Federlenkers ist die vergleichsweise groß dimensionierte Luftfeder abgestützt, die oberseitig direkt unter dem Fahrzeugrahmen liegt, d.h. unter dem Längsträger des Fahrzeugrahmens. Die Luftfeder kann hierbei direkt über der gefederten Achse oder etwas dahinterliegend angeordnet sein. In letztgenannter Lage befindet sich der Stoßdämpfer direkt über der gefederten Achse. Der Federlenker ist mithin ein einfach gestaltetes Konstruktionselement. Die Gesamtanordnung ermöglicht einen großen Freiraum bei einem Lenkeinschlag einer gelenkten Achse. Besonderer Vorteil ist, daß gleichwohl nicht auf eine durchgehende Führungsfeder verzichtet werden muß, durch die nach dem Stand der Technik der Luftbalg seitlich von der Führungsfeder angeordnet werden muß. Insgesamt ergibt sich ein geringer Platzbedarf, ein geringer Änderungsaufwand zur Einrichtung einer Achsschenkellenkung, sowie eine geringe Bauhöhe.

Es ist also eine Achsführung mittels einer durchgehenden Führungsfeder vorgesehen, die sich am Fahrzeugrahmen an zwei Federlagern abstützt. Die Führungsfeder ist unter dem vorzugsweise als Parabellenker ausgebildeten Federlenker und hierbei wiederum über der gefederten gelenkten Achse angeordnet. Führungsfeder und Parabellenker sind mit dem eigentlichen Achskörper zusammengespannt. Die Führungsfeder übernimmt in erster Linie Längs- und Querführungsaufgaben, kann aber auch zusätzlich einen statischen Traganteil aufbringen.

Das vordere Federlager ist ein Festlager, das mit dem Federauge der Führungsfeder ein Scharniergelenk bildet. Das Federauge des Parabellenkers umschließt das Federauge der Führungsfeder derart, daß eine Längsverschiebung und im Bereich des vorderen Federlagers auch eine begrenzte Querverschiebung des Parabellenkers relativ zur Führungsfeder möglich ist. In vertikaler Richtung ist kein Spiel zwischen den Federaugen vorhanden.

Führungsfeder und Parabellenker müssen so geformt sein, daß sie sich im Bereich zwischen vorderem Federlager und Achse nicht ungewollt berühren.

Das hintere Federlager ist eine Längsbewegungen zulassende Führung, vorzugsweise eine Schwingenführung.

Der Parabellenker ist als Parabelhalbfeder ausgeführt. Das achsseitige Ende des Parabellenkers kann auch über die Achse hinaus verlängert sein. Die Lenkerverlängerung ist dann aber derart gestaltet, daß eine ungewollte Berührung der Federoberflächen ausgeschlossen ist.

Die Luftfeder stützt sich zwischen dem Parabellenker und dem Fahrzeugrahmen ab.

Die Luftfeder kann über oder hinter der Achse zwischen Parabellenker und Fahrzeugrahmen liegen.

Ebenso kann alternativ zur Luftfederanordnung der Stoßdämpfer hinter bzw. über der Achse angeordnet sein. Ist der Stoßdämpfer über oder hinter der Achse angeordnet, können die jeweiligen unteren Lagerungen zusammen mit dem Lenker und der Achse verspannt werden. Befindet sich die Luftfeder bzw. der Balg über der Achse, kann der Stoßdämpfer vor oder hinter der Achse liegen, wobei das untere Ende auch auf Höhe der Achse oder tiefer liegen kann. Bei einer Anordnung der Luftfeder über der gefederten Achse kann der Stoßdämpfer an einem oberen und an einem unteren seitlichen Auslegerkonsolenlager am Fahrzeugrahmen bzw. an der gefederten Achse befestigt sein. Liegt der Balg über der Achse und der Stoßdämpfer hinter der Achse, so kann auf Auslegerkonsolen ggf. verzichtet werden. Da die Achse im Normalfall ein torsionsweiches Profil besitzt, ist ein zusätzlicher Stabilisator von Vorteil, der die Aufbauneigung und damit die Achstorsion in Grenzen hält. Denkbar ist auch eine torsionssteife Verbindung zwischen den beiden Parabellenkern. Diese Querverbindung sollte in Achsnähe liegen, kann aber auch an den freien Enden der Parabellenker befestigt sein. Um die Achsbewegungen zu begrenzen, ohne die Achsführung unnötig zu belasten, ist ein Zug- und ein Druckanschlag vorgesehen. Durch die Querverbindung der beiden Federlenker wird die stabilisierende Wirkung der Achsaufhängung verstärkt, wodurch ein zusätzlicher Bügelstabilisator entfallen kann.

Zwar kennt man nach dem Stand der Technik gemäß FR-A-2 529 838 die Anordnung eines Lenkers über einer Halb-Feder und die Verspannung des Lenkers mit der Fahrzeugachse. Die Feder ist jedoch nicht als durchgehende, Längsund Querkräfte aufnehmende Führungsfeder, sondern als sogenannte Halbfeder ausgebildet, die allenfalls eine Hilfsquerführung der Fahrzeugachse übernimmt. Der Längs- und Querführung wird durch den gekröpften, steifen, oberen Lenker bewirkt. Gerade die erfindungsgemäße durchgehende Führungsfeder sorgt in Verbindung mit dem im wesentlichen geradlinigen, ungekröpften, darüberliegenden Federlenker für eine verbesserte Führungsfunktion der unten eingespannten Achse sowie für verbesserte Nachlaufverhältnisse.

Die Erfindung wird nachfolgend anhand eines Ausführungsbeispiels unter Bezugnahme auf beigefügte Zeichnung näher erläutert; es zeigen:

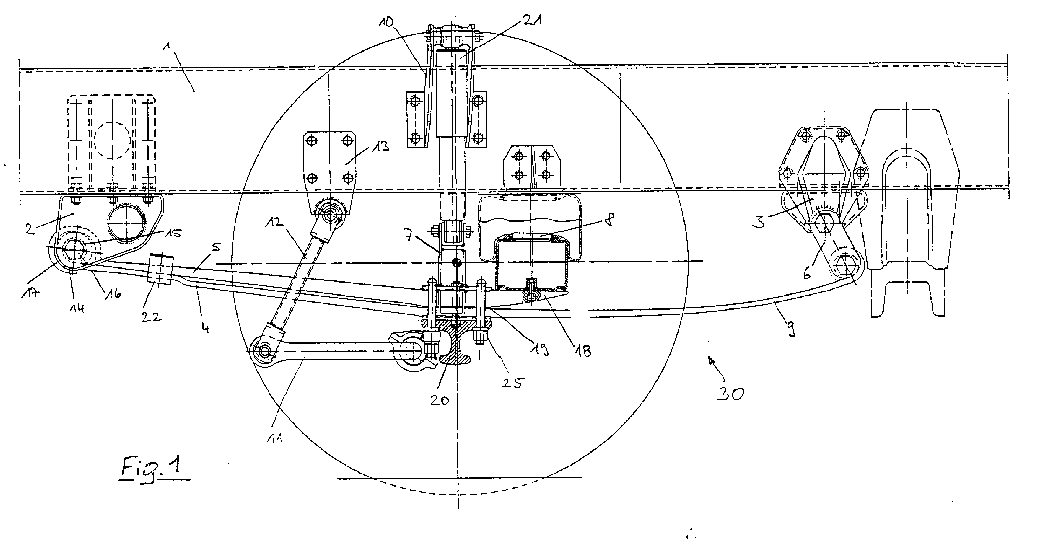

Fig. 1 in schematischer Seitenansicht eine federnde Achsaufhängung einer gelenkten Achse eines Lastkraftwagens,
Fig. 2 eine schematische Stirnansicht der gelenkten Achse nach Fig. 1,

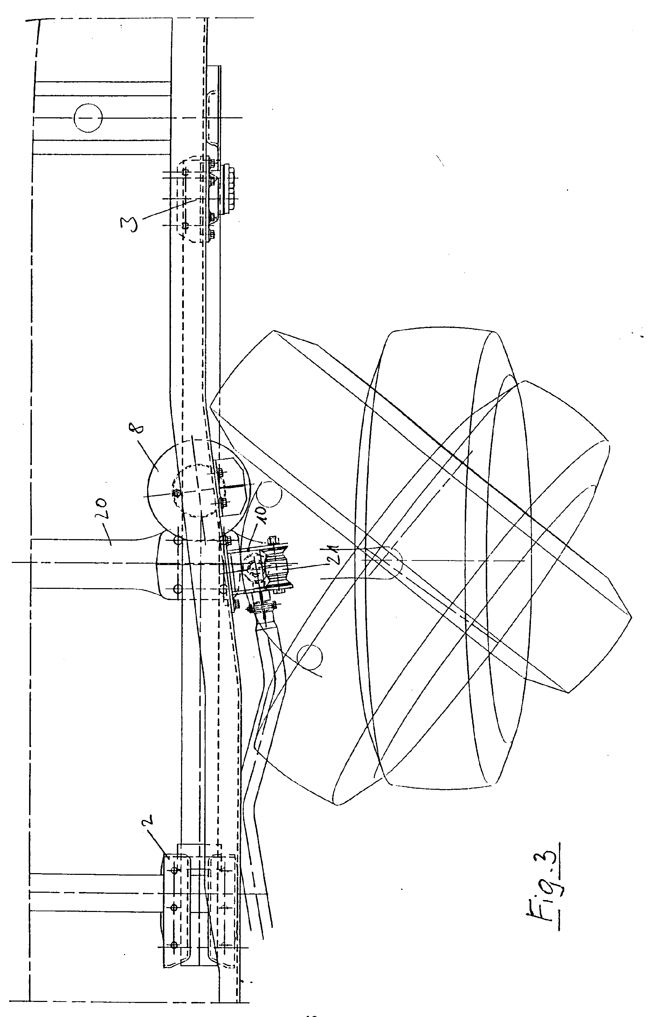

Fig. 3 eine Draufsicht auf die federnde Achsaufhängung nach den Fig. 1 und 2,
Fig. 4 die Einzelheit des vorderen Federlagers in einer Seitenansicht ähnlich der Fig. 1, und
Fig. 5 einen Querschnitt längs A-A der Fig. 4.

Gemäß Zeichnung ist eine federnde Achsaufhängung (30) eines Lastkraftwagens vorgesehen, wobei mit dem Fahrzeugrahmen (1) die Federlager (2 und 3) der Stahlfederung verschraubt sind.

Im vorderen Federlager (2) ist eine Führungsfeder (4) und ein Parabellenker (5) in noch zu beschreibender Weise angelenkt.

Das hintere Federlager (3) ist mit einer Schwinge (6) ausgebildet und nimmt das "freie" Ende der im hinteren Abschnitt (9) verlängerten Führungsfeder (4) gelenkig auf.

Führungsfeder (4), Parabel- bzw. Federlenker (5) und unteres Stoßdämpferlager (7) sind mit der, die Fahrzeugräder tragenden, als Doppel-T-Profil ausgebildeten Fahrzeugachse (20) starr verspannt, und zwar durch vordere und hintere Schraubbolzen (25).

Der Federlenker (5) ist über die Achse (20) hinaus verlängert und bildet in seinem hinteren Abschnitt (18) das untere Lager einer Luftfeder (8), auf deren oberen Ende sich das Fahrgestell (1) abstützt, bzw. der zugeordnete Längsträger des Fahrzeugrahmens.

Das untere Stoßdämpferlager (7) und das obere Stoßdämpferlager (10) sind in diesem Fall aus Einbauraumgründen als Auslegerkonsolen ausgebildet.

Der Stoßdämpfer (21) kann auch direkt neben dem Fahrzeugrahmen (1) angeordnet sein. Da der Achsquerschnitt relativ torsionsweich ist, ist die Achsaufhängung (30) mit zusätzlichen Stabilisatoren versehen. Der vor der Achse (20) angeordnete, nach vorne offene Bügelstabilisator (11) stützt sich über Streben (12) und Stabilisatorlager (13) am Fahrzeugrahmen (1) ab.

Die achsseitige Stabilisatorlagerung ist über die Achseinspannung (14) mit der Achse verbunden. Sollte der Bügelstabilisator (11) nicht ausreichen, die Aufbauneigung und damit die Achstorsion in Grenzen zu halten, besteht noch die Möglichkeit, die Enden der Federlenker (5) durch eine gemeinsame torsionssteife Brücke bzw. einen Torsionsstab miteinander zu verbinden.

Die Führungsfeder (4) ist eine Parabelfeder, deren angelenktes Ende als Federauge (14) ausgebildet ist, das ohne jedes oder ohne wesentliches Spiel eine zylindrische Hülse (15) umfaßt, die ebenfalls ohne Spiel den Lagerbolzen (16) umgibt, um den sich die Hülse mit dem vorderen Federauge (14) drehen kann. Die Führungsfeder (4) umfaßt den Bolzen (16) auf ihrer gesamten Breite. Anlaufscheiben, die zu beiden Seiten der Führungsfeder auf den Bolzen aufgesteckt sind, gleichen das seitliche Spiel aus und sorgen gleichzeitig für eine annähernd verzwängungsfreie Bewegungsmöglichkeit des Lenkerpakets sowie die Einleitung der Lenkerquerkräfte in den Federbock (aber erst, wenn das geringe seitliche Lenkerspiel (pro Seite ca. 1 mm) überwunden ist).

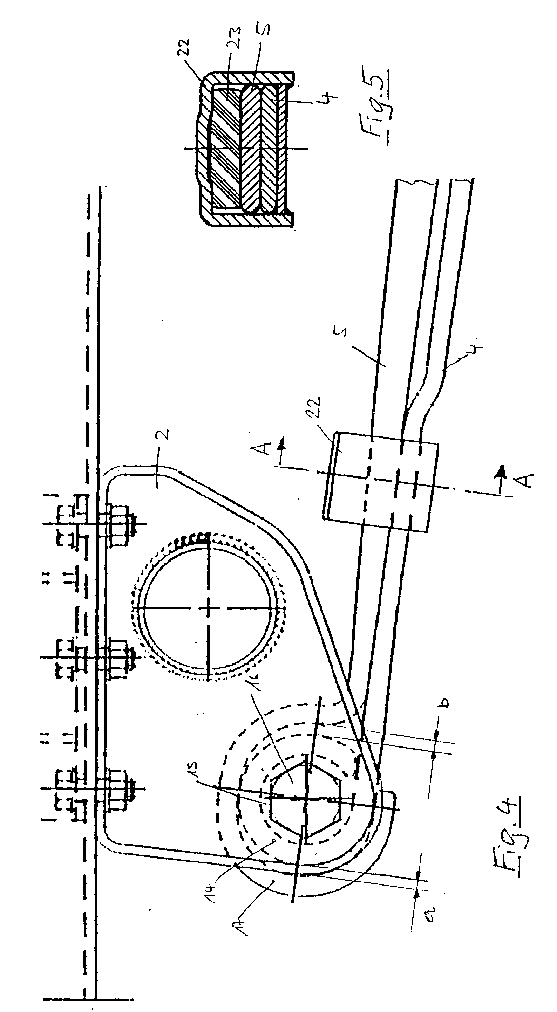

Der Federlenker (5) ist als Parabellenker ausgebildet. Das schwächste Ende (17) umfaßt das vordere Federauge (14) der Führungsfeder (4) so, daß der Parabel- oder Federlenker (5) bei gleichem oder wechselseitigem Einfedern der Achse (20) auf beiden Fahrzeugseiten keine Zugkräfte übertragen muß. Wenn sich die Achse (20) infolge ungleichmäßigen Einfederns beider Seiten aus seiner normalen Lage in Schräglage stellt, verbiegt und tordiert sich die Führungsfeder (4) und der Parabellenker (5), wobei sich die Mitte des schwächsten Endes (17) des Parabellenkers bzw. des vorderen Federauges des Parabellenkers (5) gegenüber der Mitte des vorderen Federauges (14) der Führungsfeder (4) verschiebt. Um diesen Verschiebeweg zu ermöglichen, ist das vordere Federauge (17) des Parabellenkers gemäß Fig. 4 ellipsenförmig oder oval gestaltet, so daß in Fahrzeuglängsrichtung vorne ein Spiel (a) und hinten ein Spiel (b) gegenüber dem vorderen Federauge (14) der Führungsfeder (4) verbleibt, wie dies in Fig. 4 veranschaulicht ist. In vertikaler Richtung ist das vordere Federauge (17) des Federlenkers (5) so ausgebildet, daß es mit leichter Vorspannung auf dem vorderen Federauge (14) der Führungsfeder (4) aufliegt. Beim Bremsen werden Führungsfeder (4) und Federlenker (5) dahingehend S-förmig verformt, daß sich der vor der Achse (20) liegende Teil des Federlenkers (5) zur Fahrbahn hin durchbiegt. Der Feder- oder Parabellenker (5) wird dabei weniger verformt als die Führungsfeder (4). Um unnötige Klappergeräusche zu vermeiden, werden Führungsfeder (4) und Federlenker (5) durch eine Federklammer (22) umschlossen, die ein vorgespanntes Gummipolster (23) gemäß Fig. 5 enthält und dadurch Führungsfeder und Federlenker gegeneinander gedrückt werden, gleichwohl eine Längsverschiebung zwischen den Teilen möglich ist.

Die Führungs- oder Parabelfeder (4) und der Feder- bzw. Parabellenker (5) sind so ausgewalzt, daß die einander berührenden Seiten der Federn eben sind und die parabelförmige Auswalzung jeweils an der Außenseite liegt. Im Kontaktbereich kann es zu Reibkorrosion kommen. Daher ist die Federklammer (22) in einem Bereich in der Nähe der vorderen Federaugen (14 bzw. 17) befestigt, wo die Blattdicke aus Gründen der Krafteinleitung überdimensioniert ist.

Das freie Ende der Führungsfeder (4) ist derart vorgesprengt, daß die Eigenfrequenz der Achsaufhängung (30) möglichst wenig von der Stahlfeder beeinflußt wird. Dabei muß allerdings gewährleistet sein, daß das leere Fahrzeug noch im gewünschten Maße abgesenkt werden kann und in diesem Zustand die Spannungen noch in zulässigen Grenzen liegen. Dadurch wird der Traganteil der Luftfeder (8) soweit wie möglich reduziert, und es kann eine im Durchmesser kleinere Luftfeder verwendet werden. Dies sollte allerdings nur im Fall begrenzten Einbauraums oder anderer schwerwiegender Gründe so ausgeführt sein. Prinzipiell ist eine möglichst große Luftfeder (8) anzustreben, um den Luftfedercharakter zu erhalten bzw. zu erhöhen.

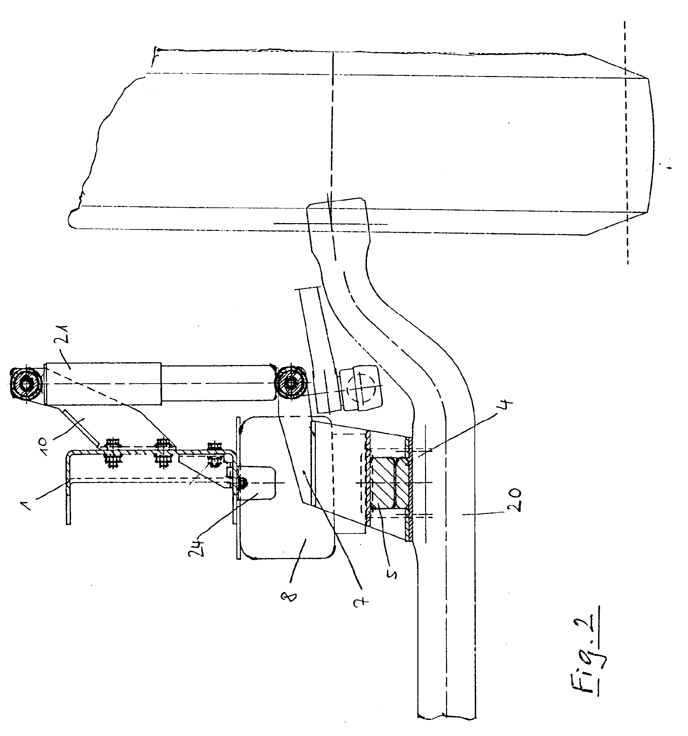

In statischer Lage sollte die Radachse nicht höher liegen als der Lagerbolzen (16) am vorderen Federlager (2), besser noch etwas unterhalb. Dadurch ergeben sich geringste Radstandsänderungen mit einem leicht untersteuernden Eigenlenkverhalten der Achse. Der Gummianschlagpuffer (24) kann, wie dies insbesondere der Fig. 2 zu entnehmen ist, über der Achse liegen, wobei das wirksame Volumen der Luftfeder (8) nicht eingeschränkt wird. Es ist auch denkbar, ihn in die Luftfeder (8) zu integrieren, wodurch sich bessere Notfedereigenschaften bei einem Ausfall der Luftfeder ergeben.

Alle in der Beschreibung erwähnten und in der Zeichnung gezeigten Merkmale allein und/oder in sinnvoller Kombination sind erfindungswesentlich, auch soweit sie in den Ansprüchen nicht ausdrücklich beansprucht sind.

## Patentansprüche

1. Federnde Achsaufhängung (30) für Kraftfahrzeuge, insbesondere Nutzfahrzeuge, mit einer Führungsfeder (4) und einem Federlenker (5), die beide am gemeinsamen vorderen Federlager des Fahrzeugrahmens (1) angelenkt sind, wobei im Bereich des hinteren Endes des Federlenkers (5) eine Luftfeder (8) abgestützt ist, die oberseitig am Fahrzeugrahmen (1) befestigt ist,
dadurch gekennzeichnet,
daß die durchgehende Führungsfeder (4) als vorgesprengte Parabelfeder ausgebildet ist, wobei der hintere, hinter der gefederten Achse (20) gelegene Abschnitt (9) der Parabelfeder länger als der vordere, am Federauge (14) angelenkte Abschnitt ausgebildet ist, und daß der im wesentlichen ungekröpfte Federlenker (5) über der Parabelfeder angeordnet und mit der darunterliegenden gefederten (Lenk-)Achse (20) verspannt ist.

2. Achsaufhängung nach Anspruch 1,
dadurch gekennzeichnet,
daß die Luftfeder (8) über der oder mit geringerem Abstand hinter der gefederten Achse (20) und unter dem Fahrzeugrahmen (1) angeordnet ist.

3. Achsaufhängung nach Anspruch 2,
dadurch gekennzeichnet,
daß über der gefederten Achse (20) das untere Ende des Stoßdämpfers (21) angeordnet ist.

4. Achsaufhängung nach Anspruch 1,
dadurch gekennzeichnet,
daß bei einer Anordnung der Luftfeder (8) über der gefederten Achse (20) der Stoßdämpfer (21) an einem oberen und einem unteren seitlichen Auslegerkonsolenlager am Fahrzeugrahmen (1) bzw. an der gefederten Achse (20) befestigt ist (Fig. 2).

5. Achsaufhängung nach einem der Ansprüche 1 bis 4,
dadurch gekennzeichnet,
daß der Federlenker (5) als Blatt- oder Parabelfeder ausgebildet sind.

6. Achsaufhängung nach einem der Ansprüche 1 bis 5,
dadurch gekennzeichnet,
daß das vordere Ende (17) des Federlenkers (5) das vordere Federauge (14) der Führungsfeder (4) in Vertikalrichtung im wesentlichen spielfrei und in Horizontalrichtung mit Spiel umgreift (vgl. Fig. 4).

7. Achsaufhängung nach einem der Ansprüche 1 bis 6,
dadurch gekennzeichnet,
daß die Führungsfeder (4) über eine Schwinge (6) am hinteren Federauge bzw. Federlager (3) des Fahrzeugrahmens (1) angelenkt ist, die eine Horizontalbewegung der Führungsfeder (4) im Betrieb ermöglicht (Fig. 1).

8. Achsaufhängung nach einem der Ansprüche 1 bis 7,
dadurch gekennzeichnet,
daß die gefederte Achse (20) zumindest einen zusätzlichen Stabilisator aufweist und/oder die Achsaufhängung durch eine Querverbindung verstärkt ist.

9. Achsaufhängung nach Anspruch 8,
dadurch gekennzeichnet,
daß der Stabilisator ein vorne offener, an der Achse (20) befestigter Bügelstabilisator (11) ist, der sich über zumindest eine Strebe (12) an einem Stabilisationslager (13) des Fahrzeugrahmens (1) abstützt (vgl.Fig.1).

10. Achsaufhängung nach Anspruch 8 oder 9,
dadurch gekennzeichnet,
daß der Stabilisator ein in Fahrzeugquerrichtung verlaufender Torsionsstab ist, der zwischen den gefederten Achsen (20) beider Fahrzeugseiten im Bereich der beiden Achsen (20) oder an den hinteren Enden (18) der beiden Federlenker (5) befestigt ist.

11. Achsaufhängung nach einem der Ansprüche 1 bis 10,
dadurch gekennzeichnet,
daß Führungsfeder (4) und Federlenker (5) im Bereich des vorderen Federauges (14) durch eine Federklammer (22) umfaßt sind, die eine Relativlängsverschiebung zwischen Führungsfeder (4) und Federlenker (5) im Betrieb ermöglicht.

12. Achsaufhängung nach Anspruch 11,
dadurch gekennzeichnet,
daß die Federklammer (22) ein inneres vorgespanntes Gummipolster (23) aufweist, das Führungsfeder (4) und Federlenker (5) gegeneinander drückt (vgl. Fig.5).

13. Achsaufhängung nach Anspruch 11 oder 12,
dadurch gekennzeichnet,
daß Führungsfeder (4) und Federlenker (5) im Längenbereich zwischen Federklammer (22) und gefederter Achse (20) voneinander beabstandet angeordnet sind (vgl. Fig. 1 und 4).

## Claims

1. A spring axle suspension (30) for motor vehicles, especially commercial vehicles, having a guide spring (4) and a spring guide rod (5), both being pivoted to the common front spring bearing of the vehicle frame (1), in which a pneumatic spring (8) is mounted near the rear end of the spring guide rod (5) and is secured at the top the vehicle frame (1), characterised in that the guide spring (4), which is continuous, is in the form of a pre-cambered parabolic spring, the rear portion (9) of the parabolic spring behind the sprung axle (20) being longer that the front portion pivoted to the rolled end (14), and the spring guide rod (5), which is substantially unbent, is disposed above the parabolic spring and is prestressed together with the sprung (steering) axle (20) disposed underneath it.

2. An axle suspension according to claim 1, characterised in that the pneumatic spring (8) is disposed above or a slight distance behind the sprung axle (20) and under the vehicle frame (1).

3. An axle suspension according to claim 2, characterised in that the bottom end of a shock-absorber (21) is disposed above the sprung axle (20).

4. An axle suspension according to claim 1, characterised in that when the pneumatic spring (8) is disposed above the sprung axle (20), the shock-absorber (21) is secured by a top and a bottom lateral bracket to the vehicle frame (1) and/or to the sprung axle (20) (Fig. 2).

5. An axle suspension according to any one of claims 1 to 4, characterised in that the spring guide roc (5) is in the form of a leaf spring or parabolic spring.

6. An axle suspension according to any one of claims 1 to 5, characterised in that the front end (17) of the spring guide rod (5) surrounds the front rolled end (14) of the guide spring (4) substantially without clearance in the vertical direction and with clearance in the horizontal direction (see Fig. 4).

7. An axle suspension according to any one of claims 1 to 6, characterised in that the guide spring (4) is pivoted by a link (6) to the rear rolled end or spring bearing (3) of the vehicle frame (1), allowing the guide spring (4) to move horizontally during operation (Fig. 1).

8. An axle suspension according to any one of claims 1 to 7, characterised in that the sprung axle (20) has at least one additional stabiliser and/or the axle suspension is reinforced by a transverse connection.

9. An axle suspension according to claim 8, characterised in that the stabiliser is a curved stabiliser open at the front and secured to the axle (20) and braced by at least one strut (12) against a stabilising bearing (13) on the vehicle frame (1) (see Fig. 1).

10. An axle suspension according to claim 8 or 9, characterised in that the stabiliser is a torsion rod which extends in the transverse direction of the vehicle and is secured between the sprung axles (20) on the two sides of the vehicle in the region of the two axles (20) or is secured to the rear ends (18) of the two spring guide rods (5).

11. An axle suspension according to any one of claims 1 to 10, characterised in that the guide spring (4) and the spring guide rod (5), in the region of the front rolled end (14), are secured by a spring clamp (22) which enables the guide spring (4) to move longitudinally relative to the spring guide rod (5) during operation.

12. An axle suspension according to claim 11, characterised in that the spring clamp (22) comprises an internal prestressed rubber pad (23) which presses the guide spring (4) and the spring guide rod (5) against one another (see Fig. 5).

13. An axle suspension according to claim 11 or 12, characterised in that the guide spring (4) and the spring guide rod (5) are spaced apart from one another in the longitudinal region between the spring clamp (22) and the sprung axle (20) (see Figs. 1 and 4).

## Revendications

1. Suspension élastique d'essieu (30) pour des véhicules automobiles, notamment des véhicules utilitaires comportant un ressort de guidage (4) et un bras de ressort (5) articulés tous deux sur un palier de ressort avant, commun du châssis (1) du véhicule, un ressort à air (8) étant appuyé au niveau de l'extrémité arrière du bras de ressort (5), le côté supérieur de ce ressort à air étant fixé au châssis (1) du véhicule, suspension caractérisée en ce que :
le ressort de guidage (4), continu, est en forme de ressort parabolique précontraint, le segment arrière (9) du ressort parabolique, situé derrière le corps d'essieu suspendu (20), étant plus long que le segment avant articulé sur l'oeillet de ressort (14), et le bras de ressort (5), pratiquement non recourbé, est placé au-dessus du ressort parabolique et est serré sur le corps d'essieu (directeur) (20), suspendu, situé en-dessous.

2. Suspension d'essieu selon la revendication 1, caractérisée en ce que le ressort à air (8) est situé par-dessus ou à une faible distance derrière le corps d'essieu suspendu (20) et sous le châssis (1) du véhicule.

3. Suspension d'essieu selon la revendication 1, caractérisée en ce que l'extrémité inférieure de l'amortisseur (21) est prévue au-dessus du corps d'essieu suspendu (20).

4. Suspension d'essieu selon la revendication 1, caractérisée en ce que dans le cas d'un montage du ressort à air (8) au-dessus du corps d'essieu suspendu (20), l'amortisseur (21) est fixé à un palier de console de bras latéral supérieur et inférieur sur le châssis (1) ou sur le corps d'essieu (20) suspendu (figure 2).

5. Suspension d'essieu selon l'une des revendications 1 à 4, caractérisée en ce que le bras de ressort (5) est un ressort-lame ou un ressort parabolique.

6. Suspension d'essieu selon l'une des revendications 1 à 5, caractérisée en ce que l'extrémité avant (17) du bras de ressort (5) entoure l'oeillet de ressort (14) avant du ressort de guidage (4) pratiquement sans jeu dans la direction verticale, et avec du jeu dans la direction horizontale (voir figure 4).

7. Suspension d'essieu selon l'une des revendications 1 à 6, caractérisée en ce que le ressort de guidage (4) est articulé par l'intermédiaire d'une jumelle de ressort (6) à l'oeillet de ressort, arrière, ou au palier de ressort (3) du châssis (1) du véhicule, permettant au ressort de guidage (4) d'effectuer un mouvement horizontal lorsqu'il est mis en oeuvre (figure 1).

8. Suspension d'essieu selon l'une des revendications 1 à 7, caractérisée en ce que le corps d'essieu suspendu (20) comporte au moins un stabilisateur supplémentaire et/ou la suspension d'essieu est renforcée par une liaison transversale.

9. Suspension d'essieu selon la revendication 8, caractérisée en ce que le stabilisateur est un stabilisateur à étrier (11) ouvert à l'avant, fixé au cors d'essieu (20) et qui s'appuie par au moins une bielle (12) sur un palier de stabilisation (13) du châssis (1) du véhicule (voir figure 1).

10. Suspension d'essieu selon la revendication 8 ou 9, caractérisée en ce que le stabilisateur est une barre de torsion dirigée dans la direction transversale du véhicule, cette barre étant fixée entre les corps d'essieu suspendus (20) des deux côtés du véhicule au niveau des deux corps d'essieu (20) ou à l'extrémité arrière (18) des deux bras de ressort (5).

11. Suspension d'essieu selon l'une des revendications 1 à 10, caractérisée en ce que le ressort de guidage (4) et le bras de ressort (5) sont entourés au niveau de l'oeillet de ressort (14) avant par un étrier de ressort (22) permettant un mouvement relatif de translation entre le ressort de guidage (4) et le bras de ressort (5) lors de la mise en oeuvre.

12. Suspension d'essieu selon la revendication 11, caractérisée en ce que l'étrier de ressort (22) comporte un coussin en caoutchouc (23) à précontrainte intérieure, qui pousse l'un contre l'autre le ressort de guidage (4) et le bras de ressort (5) (voir figure 5).

13. Suspension d'essieu selon la revendication 11 ou 12, caractérisée en ce que le ressort de guidage (4) et le bras de ressort (5) sont prévus dans la zone longitudinale entre l'étrier de ressort (22) et le corps d'essieu suspendu (20), à une certaine distance l'un de l'autre (voir figures 1 et 4).
